# EUROPEAN PATENT APPLICATION

(11) **EP 2 747 031 A1**
(43) Date of publication of application: **25.06.2014**
(21) Application number: 12199271.3
(22) Date of filing: 21.12.2012
(51) Int. Cl.: G06T 11/00, G06F 17/00

(54) **A method of publishing digital content**

(71) Applicant: News Corp UK & Ireland Limited, London E98 1XY (GB)
(72) Inventor: Jackson, Paul James, London, E98 1XY (GB); Breuer, Alexander Joseph, London, E98 1XY (GB); Steyn, Mark Phillip James, London, E98 1XY (GB); Springgay, David Douglas, London, E98 1XY (GB)
(74) Representative: Finnie, Peter John

(57) **Abstract**

There is provided a computer-implemented method of publishing digital content in a page-based grid format for a device, the method comprising: identifying device attributes; obtaining raw digital content; determining a device-specific font size for the raw content based on the device attributes; determining a column width for page columns within a page grid; determining the number of available column rows within the page grid based on the column width; and, automatically populating the page columns with the digital content to generate a device specific digital publication in a page-based grid format for display on the device.

## Description

### Background of the invention

In conventional newspaper print publishing, a page is usually designed to conform to a column format. A column is one or more vertical blocks of content positioned on a page, separated by gutters or rules. Columns are most commonly used to break up large bodies of text to improve page composition and readability. Newspapers frequently use multi-column layouts, in what is known as a column-grid format, to break up different stories and longer bodies of texts within a story. It has been shown, both anecdotally and scientifically, that this column-based format is preferred by readers for the consumption of printed text on a page.

In the traditional column-based format, each page is divided into a grid of columns and filled with content. For example, the text of an article is filled into a number of columns having a fixed width, typically with a title spanning the columns at the top of the article. Additional content such as a by-line, masthead, teasers or advertisements are positioned on the page around or within the grid. An important editorial objective is to fill the page without leaving any substantial area of white 'space'.

For a given page size, for example tabloid or broadsheet, it is conventionally the job of a news designer to arrange the layout of material on the page according to editorial and graphical guidelines set by the publisher, usually to fill the page as completely as possible. Considerations include readability, composition, and the balanced and unobtrusive incorporation of advertising. It is also highly important that the publication maintains a consistent 'look and feel' throughout. This look and feel aids reader familiarity with the publication and also provides important brand recognition that serves to distinguish between different publications.

The advent and popularity of smartphones and other mobile computing devices, in particular tablet computing devices, has significantly altered the publishing landscape, creating new markets and opportunities. Publishers are increasingly looking to produce rich and engaging tablet editions for newspapers and magazines that maintain the column-based format that is preferred by readers whilst conforming to the editorial and graphical guidelines set by the publishers.

The display screens of tablet and other mobile devices currently available on the market vary considerably in size and resolution. Furthermore, there are a number of different operating systems to contend with, which currently include Apple® IOS™, Blackberry® BB10™ and Google® Android™ amongst others. These variations cause significant problems to publishers because it makes it very difficult to achieve a consistent output across a range of devices. New mobile devices and platforms are launched on a regular basis.

In tablet-based publishing, it has become common for designers to produce a single flattened image of each page of the publication. The image is optimised for a given device. Accordingly, in order for different devices to display a given page correctly, a separate page must be created for each device. Currently, this is the only available method of predictably ensuring the readability and consistency of layout required by publishers. This is a particularly inefficient and costly process, requiring a number of teams to create each edition of a newspaper, for example.

In an attempt to address this technical problem, sophisticated tablet publishing tools are now available which are capable of providing an adaptive layout. The algorithms employed by these publishing tools scale different components of the page, or move content to a new page, depending on the screen resolution of the target device. For example, the size of the page font or of an image may increase or decrease depending on the screen resolution of the target device. However, these solutions cannot consistently maintain the quality of the original layout across a range of different devices, which is especially important for some publishers.

### Summary of the Invention

According to a first aspect of the present invention, there is provided a computer-implemented method of publishing digital content in a page-based grid format to a device having a display and provisioned with an application that, when invoked, causes display of the digital content, the method comprising: serving to the device a set of content layout templates, the set having at least one member; serving to the device raw digital content associated with at least one of the templates; the application being configured to cause storage on the device of the raw digital content and storage of the set of templates, and to cause retrieval of the at least one of the templates and the raw digital content when the application is invoked to display the digital content, each of the templates including computer readable instructions which when executed on the device are operative to: determine a device-specific font size for the raw content; determine a column width for page columns within a page grid; determine the number of available column rows within the page grid based on the column width; and, automatically populate the page columns with the digital content, so that the device is caused by the application to display the digital content in a page-based grid format.

The computer readable instructions of the template when executed on the device may be additionally operative to fit the text content to fill to a column boundary. The computer readable instructions of the template when executed on the device may also be additionally operative to fit text content to fill to a page boundary. In this way, the layout can be predicted whilst maintaining an optimal reading experience. There is no whitespace left on the page or column so the reading experience is optimal. The computer readable instructions of the template when executed on the device may be additionally operative to fit text content to a boundary by scaling non-text digital content.

Additionally, the computer readable instructions of the template when executed on the device may be operative to: identify any unfilled column rows; and, substantially fill unfilled column rows to a page boundary with additional digital content. In this way, the whitespace on the page can be filled such that the reader is served with content and not served blank space. This is beneficial to both the consumer and the publisher.

It is considered that the present invention is unprecedented in its application and commercially significant for the publishing industry for whom the challenge of a multi-platform, multi-device environment is extremely significant.

The present invention provides a method of producing layout equivalence between different devices, that is, the layout look and feel is consistent between mobile devices having different pixel densities and screen sizes. The invention provides a consistent reading experience and level of design across a multitude of mobile devices and platforms and device orientations from a single original data source. The text and layout of an article is faithfully rendered with substantially the same text size and layout components as originally intended.

In addition, being able to predict layout behaviour allows the publisher to provide a viable solution for adverts wherein the publisher can provide effective creative applications that preserve the visual integrity of their brands and message. The method can be used to build new publication applications in a much faster, cheaper and more robust way. The method will significantly improve digital delivery by allowing new features to be added once and surfaced on all applications.

The computer readable instructions of the template when executed on the device may be additionally operative to fill the additional digital content in accordance with a set of predetermined rules specific to content type. The publishers or editorial teams can thus determine the look and feel of the publication.

Preferably, determining the device-specific font size may be based on a pixel density of the display screen. In this way, the layout of the page can be changed for a different device. When determining a device-specific font size, the computer readable instructions of the template when executed on the device may be operative to evaluate the pixel density against a predetermined lookup table.

The computer readable instructions of the template when executed on the device may be additionally operative to determine the dimensions of the page grid. When determining the dimensions of the page grid the computer readable instructions of the template when executed on the device may be additionally operative to receive the dimensions from an application installed on the device. Further, when determining the column width the computer readable instructions of the template when executed on the device may be additionally operative to: determine a column gutter width; and, evaluate a predetermined set of column widths based on the page grid dimensions and the column gutter width. When determining a column gutter width, the computer readable instructions of the template when executed on the device may be additionally operative to evaluate the pixel density against a predetermined lookup table. When determining the number of available column rows the computer readable instructions of the template when executed on the device may be additionally operative to: determine a device-specific line height for text content; and, determine the number of available column rows based on the device-specific line height and the dimensions of the page grid.

Preferably, when automatically populating the page columns with digital content the computer readable instructions of the template when executed on the device may be additionally operative to: identify mandatory non-text content items; determine the area occupied by the mandatory non-text content items; and, determine the number of available column rows for text content based on the dimensions of the page grid and the area occupied by the mandatory non-text content items.

Additionally, the computer readable instructions of the template when executed on the device may also be operative to receive a pixel density of the device from an application installed on the device. Further, the computer readable instructions of the template when executed on the device may be additionally operative to identify the device and determine a pixel density based on the identification and a stored set of pixel densities.

Further, when fitting text content the computer readable instructions of the template when executed on the device may be additionally operative to: determine the minimum number of pages required to display the digital content; distribute the digital content amongst the pages according to a first set of predetermined rules; filter the digital content according to a second set of predetermined rules; evaluate possible combinations of digital content sizes to determine a preferred layout; and, render the preferred layout. In this way, the template may determine an optimal layout of the content items and fit these to a boundary to provide an optimal reading experience.

According to a second aspect of the present invention, there is provided a computer implemented method of publishing digital content in a page-based grid format on a device having a display screen, comprising the following computer processes: determining a device-specific font size for text content received by the device; determining a column width for page columns within a page grid; determining the number of available column rows within the page grid based on the column width; and, automatically populating the page columns with digital content based on results of the foregoing determining processes. The method may further comprise fitting text content to fill to a column or page boundary. The method may further comprise fitting text content to a boundary by scaling non-text digital content. Further, the method may comprise: identifying any unfilled column rows; and, substantially filling unfilled column rows to a page boundary with additional digital content.

The device may be selected from a group comprising one or more of: a smartphone; a tablet computer; a personal computer; and, an e-reader. The described steps may be carried out using web technologies. Exemplary web technologies include HTML5, JavaScript and CSS. Web technologies are used to enable a build once, deploy everywhere strategy.

According to a third aspect of the present invention, there may be provided a storage medium containing a content layout template comprising computer readable instructions that when executed by a processor in a device having a display are operable to: determine a device-specific font size for text received by the device; determine a column width for page columns within a page grid; determine the number of available column rows within the page grid based on the column width; and, automatically populate the page columns with digital content.

According to a fourth aspect of the present invention, there may be provided a method of publishing digital content in a page-based grid format to a device having a display, comprising: assembling raw content for an article of an edition; causing a set of content layout templates to be served to the device, the set having at least one member; linking the raw content to at least one content layout template; and, causing the raw content to be served to the device, wherein the content layout template includes computer readable instructions which when executed on the device are operative to: determine a device-specific font size for raw content; determine a column width for page columns within a page grid; determine the number of available column rows within the page grid based on the column width; and, automatically populate the page columns with raw content.

According to a fifth aspect of the present invention, there may be provided a content layout template for the display of digital content on a device having a display in a page-based grid format having columns, the content layout template comprising computer executable code for: receiving raw digital content; determining a device-specific font size for text content; determining a column width for page columns within a page grid; determining the number of available column rows within the page grid based on the column width; automatically populating the page columns with digital content, fitting text content to a column boundary; and, automatically filling unfilled columns with additional digital content.

According to a further aspect of the present invention, there may be provided a computer-implemented method of publishing digital content in a page-based grid format for a device, the method comprising: identifying device attributes; obtaining raw digital content; determining a device-specific font size for the raw content based on the device attributes; determining a column width for page columns within a page grid; determining the number of available column rows within the page grid based on the column width; automatically populating the page columns with the digital content to generate a device specific digital publication in a page-based grid format for display on the device; and, sending the publication to the device.

According to a further aspect of the present invention, there may be provided a computer-implemented method of publishing digital content in a page-based grid format for a device, the method comprising: identifying device attributes; determining a device-specific font size for raw digital content based on the device attributes; determining a column width for page columns within a page grid; determining the number of available column rows within the page grid based on the column width; generating device specific computer instructions which direct the layout and population of the page columns with the digital content; and, sending the computer instructions to the device for subsequent rendering of the digital content on a display of the device.

In this way the layout formatting may be performed at the server side of the system, rather than dynamically on the device. Some devices may have limited processing capability which may restrict the ability of the device to render the layouts or at least to do so in a timely manner. The present embodiment reduces the processing demands on the device itself.

Preferably the method may be performed at a server capable of communicating with the device. The method may further comprise receiving a request from the device for digital content. Identifying device attributes may comprise: receiving the device attributes from the device.

Further, the step of identifying device attributes may include providing a graphical user interface for selecting a target device from a plurality of devices. The device attributes may include one or more of a group selected from device type, specific device and device pixel density.

The method may also further comprising: providing a set of content layout templates, the set having at least one member, wherein the raw digital content is associated with at least one of the templates and wherein each of the content layout templates includes computer readable instructions which when executed are operative to perform at least the steps of determining a column width, determining the number of available column rows and automatically populating the page columns with the digital content or generating device specific computer instructions.

The step of automatically populating the page columns with the digital content or generating device specific computer instructions may include fitting text content to fill to a column boundary. The step of automatically populating the page columns with the digital content or generating device specific computer instructions may include fitting text content to fill to a page boundary. The step of automatically populating the page columns with the digital content or generating device specific computer instructions may include fitting text content to a boundary by scaling non-text digital content.

The step of automatically populating the page columns with the digital content may include: identifying any unfilled column rows; and, substantially filling unfilled column rows to a page boundary with additional digital content.

Additionally, the method may further comprise determining the dimensions of the page grid, wherein the step of determining the column width includes: determining a column gutter width by evaluating a pixel density against a predetermined lookup table; and, evaluating a predetermined set of column widths based on the page grid dimensions and the column gutter width.

According to a further aspect of the present invention, there may be provided a storage medium comprising computer readable instructions that when executed by a processor are operable to publish digital content in a page-based grid format for a device, wherein the computer readable instructions when executed by a processor are operable to: identify device attributes; obtain raw digital content; determine a device-specific font size for the raw content based on the device attributes; determine a column width for page columns within a page grid; determine the number of available column rows within the page grid based on the column width; automatically populate the page columns with the digital content to generate a device specific digital publication in a page-based grid format for display on a device; and, send the publication to the device.

According to a further aspect of the present invention, there may be provided a storage medium comprising computer readable instructions that when executed by a processor are operable to publish digital content in a page-based grid format for a device, wherein the computer readable instructions when executed by a processor are operable to: identify device attributes; determine a device-specific font size for raw digital content based on the device attributes; determine a column width for page columns within a page grid; determine the number of available column rows within the page grid based on the column width; generate device specific computer instructions which direct the layout and population of the page columns with the digital content; and, send the computer instructions to the device for subsequent rendering of the digital content on a display of the device.

### Detailed Description of the Drawings

An example of the present invention will now be described in detail with reference to the accompanying drawings, in which:

Figure 1 shows an overview of a digital publication system;

Figure 2 shows a schematic view of the architecture and operation of a mobile application according to the present invention;

Figure 3 shows an exemplary content management system;

Figure 4 shows an example of the workflow for a publication;

Figure 5 shows an overview of an exemplary content layout template according to an embodiment of the present invention;

Figure 6 shows an exemplary tablet layout indicating the grid components;

Figure 7 shows a more detailed exemplary tablet layout indicating the grid components;

Figure 8 shows an exemplary flow diagram of steps carried out by a template in an exemplary embodiment of the present invention;

Figure 9 shows an exemplary table for determining an optimal column width for a display of a mobile device;

Figure 10 shows an exemplary table for determining module size;

Figure 11 shows an exemplary flow diagram of steps carried out by a template in an exemplary embodiment of the present invention;

Figure 12 shows an exemplary output of an embodiment of the present invention;

Figure 13 shows an exemplary output of a further embodiment of the present invention;

Figure 14 shows an exemplary tablet layout with whitespace;

Figure 15 shows an exemplary flow diagram of steps carried out by a server in a first exemplary embodiment of the exemplary server-side implementation of the present invention;

Figure 16 shows an exemplary flow diagram of steps carried out by a server in a second exemplary embodiment of the exemplary server-side implementation of the present invention; and,

Figure 17 shows an exemplary flow diagram of steps carried out by a server in a third exemplary embodiment of the exemplary server-side implementation of the present invention.

### Detailed Description

The present description provides a technology capability that allows an editorial team to publish a digital edition of a newspaper simultaneously to a plurailty of different mobile operating systems, such as IOS™ or Android™. Mobile operating systems such as IOS™ or Android™ typically allow for the execution of mobile applications, also called mobile apps, which are software applications, usually designed to run on smartphones and tablet computers. The applications are usually available through application distribution platforms, which are typically operated by the owner of the mobile operating system. Usually these applications are downloaded from the platform to a mobile device such as an iPhone®, BlackBerry® or Android™ phone, but sometimes they can be downloaded to less mobile computers such as laptops or desktops.

Mobile devices running operating systems such as those described above are varied and diverse in size, dimension and aspect ratio. The embodiments described herein support automated layout optimisation of columnised, predominantly text-based content that is effective across all current devices and scalable to any future mobile device. The technologies employed herein are predominantly HTML, CSS and JavaScript however it will be understood that these technologies are given merely as examples and any suitable technologies may be used.

The advent and popularity of smartphones and other mobile computing devices, in particular tablet computing devices, has significantly altered the publishing landscape, with publishers looking to provide content to users of these mobile devices as well as, or instead of, traditional print media. One example of a mobile publication is an edition-based publication, meaning that a digital edition of the publication is published as part of a daily download that occurs when a user opens an application on the mobile device.

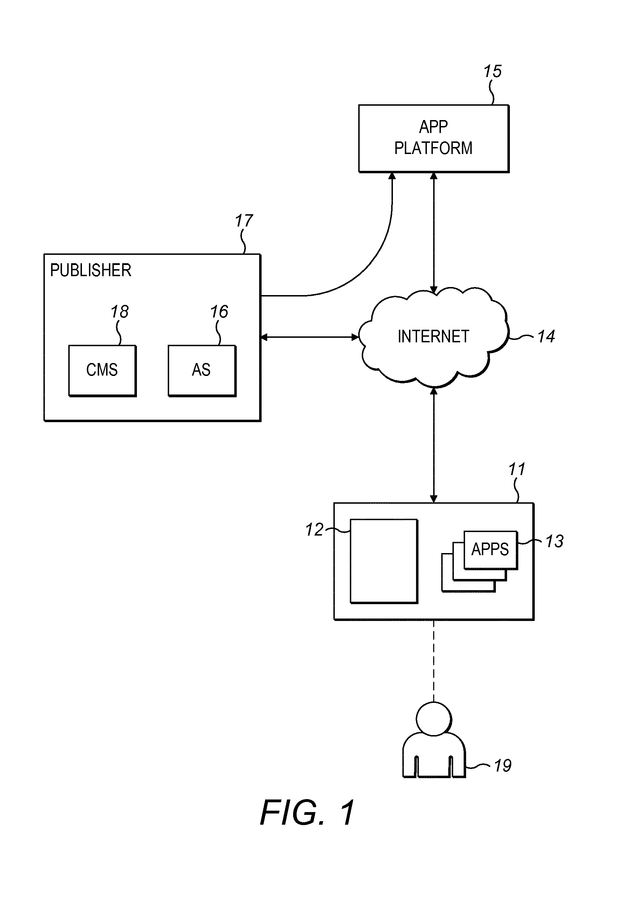

Figure 1 illustrates an overview of edition-based publishing of digital content. A mobile device 11 having a display 12 may run a number of mobile applications 13, typically downloaded over the Internet 14 from an application distribution platform 15. For the purpose of viewing a digital edition of a newspaper on an application, the relevant application retrieves the edition of the publication from an application server 16 (AS) operated by or on behalf of a publisher 17. An application 13 is provided to the application distribution platform 15 by or on behalf of the publisher 17.

The mobile device must have a data connection to the Internet 14 available in order to retrieve the daily edition, typically a WiFi connection or a 3G or 4G data connection. The user may need to be a subscriber of the publication and the application 13 may check the credentials of the user with the application server 16 to establish this. If configured to do so, the application 13 may run in the background of the operating system and download the daily edition without specific request by the user 19. When the application 13 is subsequently opened by the user 19, the daily edition is then immediately ready to be viewed. The application 13, or application binary, downloaded from the application platform 15 comprises native code to handle downloads and subscriptions.

The daily edition of a publication which is downloaded by the application 13 comprises news content and associated metadata. The daily edition may be generated by the publisher using a content management system 18 (CMS). The daily edition is downloaded as a bundle from an application server 16. The daily edition comprises a set of linked content items that combine to make up an article and a series of articles combine to make up the digital publication. Each article comprises a sub-set of the downloaded content items. The associated metadata indicates how each content item is linked and in which order the content items should be displayed. Each article will contain a set of mandatory content items and a set of optional content items. The mandatory or optional nature of each content item will be set by the curator of the article. Typically, the daily edition is in Extensible Markup Language (XML) format within which is JavaScript Object Notation (JSON) and images such as JPEGS, PNGs and links to videos.

The content items referred to may include, for example, the section title, the headline, the text (sometimes referred to as copy), the byline, visual media, the intro or standfirst, a pullquote, a cross reference, a media or picture caption, an interactive or html element, live or feed content and advertisements. During the editorial process, the editorial team create articles using a combination of text and images but associate additional images and content items such as pullquotes or related article links with the article. Advertisements and videos (and other content items) may be placed into the edition, optionally via the CMS 18, by a third party. For example, an advertisement may be placed into the CMS 18 by an advertising platform (not shown) which includes where in the article the advertisement should be placed. Typically, the text of the article and at least one image are mandatory content items. We call these content items, for purposes of this description and the following claims, "raw content", although, as just mentioned, they are sent to the mobile device in formats, such as XML, that permit identifying their function, such as headline, section title, cross reference, etc., and even though they can contain some format information.

In embodiments of the present invention, layout of the raw content on a page is governed by a separate set of instructions that we here call a "template". Generally, a template is a tool used to separate content from presentation in web design, and for mass-production of content. In the present context, for purposes of this description and the following claims, by "template" we mean a set of instructions that translate the raw content into a defined visual layout.

In the prior art, formatting of digital content is achieved by "hard-coding" of the appearance of text directly in the native IOS™ or Android™ code. A 'native' application is an application written in programming language specific to the operating system of a particular class of devices. Formatting in this manner is physically embedded into the code, so the creation of digital content for mobile devices in the prior art typically requires a replication of development work for each device operating system and thus duplication of effort on all other devices. In contrast to these prior art approaches, templates here can be configured to work on any type of mobile device and automatically achieve formatting of raw content in a manner appropriate for the device.

Native templates or templates created using web technologies can both be used to implement the principles of the present invention. In various embodiments, the templates may be described once using web technologies (HTML, JavaScript and CSS) rather than coded in the 'native' application. Templates using web technologies can be created much faster as they do not need operating system specific development. Web teams or Editorial teams can create these templates centrally and once a template has been created it can be used automatically on most mobile devices (for example those running IOS™ or Android™ operating systems, and including smartphones and tablet computers). In a preferred embodiment, the application is specific to the operating system on which it is designed to be installed, while the templates described herein are device and operating system independent.

Although the present description refers to mobile devices such as smartphones and tablets, the principles of the present invention not limited to a specific operating system or architecture and are also designed to be system or platform agnostic. The content layout templates described herein are suited to the layout of any page-based grid format.

A plurality of different templates may be used by the application to generate the digital publication. For example, the business section may require a first template and the front page of the digital publication may require another. The templates serve to produce a layout of the content items provided to it. The XML describing the edition refers, for every article, to the template that the article requires. The templates may be referred to as a set of templates or a bundles of templates, by which we mean one or more templates which are used to govern the layout of an article. When we refer to a set, we do not necessarily mean that there is more than one template in the set.

Preferably, content feeds, template bundles and edition metadata are downloaded by the application after the initial install of the application on first launch. The application bundle may include all source code to download content, templates etc, and font files. It may alternatively be possible to add some template bundles in the actual app binary for first time app launch performance optimisation. Preferably, the content and templates are downloaded from a server operated by the publishers, however it may be the case that one or both are served via a third party operator or server.

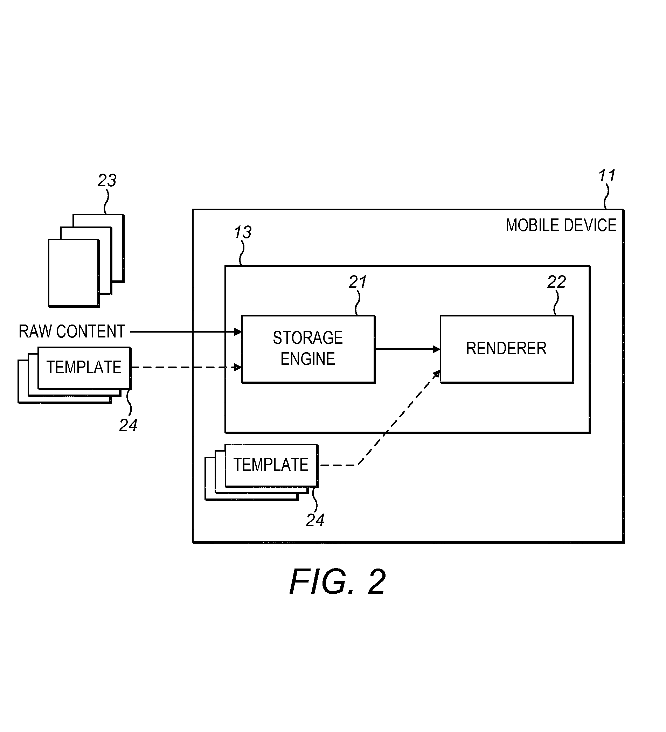

Figure 2 illustrates, at a high level, an architecture of the application 13. The application 13 on the mobile device 11 comprises a storage engine 21 and a renderer 22. The storage engine 21 is operable to retrieve raw content 23, i.e. the daily edition, from an application server 16 and pass the content 23 to the renderer 22 when requested. The renderer 22 is operable to combine and place the content items into the template 24 for display on the mobile device 11. As described above, the metadata associated with the content items, indicates to which article the content items belong and also which template should be used to display that article. The renderer may be operable to determine which template should receive the content items. For example, the metadata associated with content items that combine to make up a 'sports' article, may indicate that a specific 'sports' template should be used to display this raw content. The templates 24 may be coded into the application (not shown) or may be separately, and preferably, stored on the mobile device 11 (as shown).

The templates 24 may be retrieved from a server managed by the publisher 17, as shown, and subsequently stored by the mobile device 11. This retrieval may optionally take place on first install of the application 13, every time an edition is downloaded, i.e. as part of the edition to ensure that the latest version is used, or alternatively, it may only be downloaded when an updated template is made available by the publisher 17. The application 13 may be optionally operable to check when downloading the edition if an updated set of templates is available.

Rendering is achieved by combining an HTML template with native objects using a suitable templating language. The renderer 22 is operable to combine the content 23 with a specific template 24 stored on the mobile device 11 for display. The output may then be displayed to the user via a webview embedded in a native application 13. In this way, the templates operate in much the same way as a webpage and the renderer operates in a similar manner to a web browser on a personal computer.

Although it is described that web-technologies are used to render editorial content, in this exemplary implementation, it is proposed to take templates and 'hydrate' them with raw content on the mobile device 11, not on the server. The reasons for this approach are that raw content may be provided to the application so that it can be used for functionality such as search, or presentation in native parts of the user-interface and templates may be provided separately so that they can be stored efficiently by the native framework, and the amount of data necessary to transmit to the mobile device a formatted page of digital content is substantially reduced. As described above, and in contrast to the embodiments of the present invention described herein, it is conventional in publishing to develop complete formatting for a page before the page is transmitted by the server/publisher 17 to the mobile device 11..

Referring again to Figure 1, a content management system 18, operated by the publisher 17, assembles the raw content items for an article without styling or layout. In the content management system 18, individual content items are linked together and associated metadata is generated for each article. The content items are packaged together and provided to an application server 16 by the publisher 17 as the daily edition.

The application server 16 stores the daily edition ready for download by the application on the mobile device 11. The application server 16 may also store the latest versions of the templates 24 created by the web or editorial teams if these are to be updated, or downloaded with every edition as described above.

In a preferred embodiment, on the mobile device 11, the application 13 checks with the application server 16 if the templates 24 stored on the mobile device 11 need to be updated. If a later version is available, the application 13 retrieves the latest versions and replaces the stored versions. The mobile device 11 is then operable to fetch the daily edition, i.e. the article content, from the application server 16. As described above, once the edition has been retrieved, the application 13 will then activate a renderer 22 to produce the page for display by passing the downloaded content items to the template 24. The metadata associated with the article content indicates which template 24 should be used to govern the layout of that content. The template 24 then executes and, as will be described in more detail below, generates a page layout suitable for that mobile device 11 from the content items it has been passed.

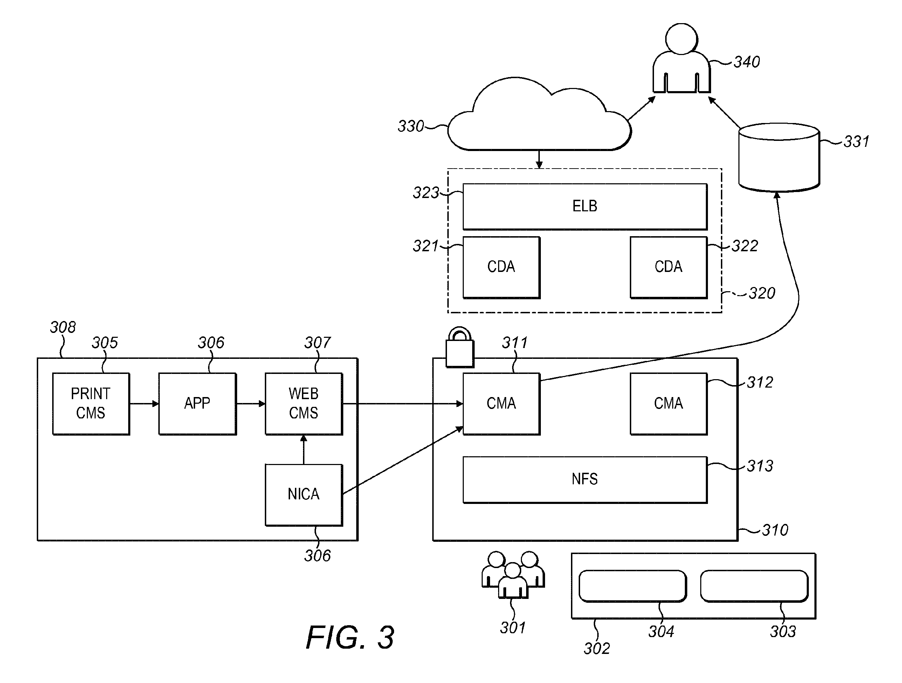

In an exemplary content management system, illustrated in Figure 3, initial content is manually entered by journalists from the editorial staff 301, via an operations dashboard 302, comprising logs 303 and an interface 304, into a system called Hermes™ 305 (PRINT CMS), an editorial workflow solution provided by Unisys®. Editorial users 301 manually pull articles from Hermes 305 using a tool called Nabster™ 306 (APP) and a web interface 307 (WEB CMS) that allows selecting of content and export to a digital content management system 310, in either active 311 (content management application, CMA) or passive forms 312 (content management application, CMA), called Escenic™ v4, which is the system that underpins the publication's website. Photographs and images are delivered into Escenic™ v4 311 via a different application called NICA 308. Those components grouped as 308 are those components located at the publisher end that store the raw content as produced by the journalists. Those components notionally grouped together to form the CMS, indicated at 310, are divided from the content stores 308 but are also located at the publisher end. The CMS components 310 are inaccessible from outside the publisher network. A Network File System 313 (NFS) may be a part of the overall CMS component group and may mount to additional multimedia content. The CMS component group may be scalable as required.

For tablet curation, a new content management system instance 320 may be set up (in this case Escenic™ v5, in either active 321 (content delivery application, CDA) or passive 322 (content delivery application, CDA) forms) which takes a direct feed from the website CMS 310 and provides a Graphical User Interface through which the tablet editorial team curate and publish the tablet edition of the publication. Images are served from the Escenic™ v5 content publishing system and cached on a data network 330 provided by Akamai®. XML containing the content of each edition is published from the Escenic™ v4 Content Management System 310 to Akamai® Net Storage 331 for serving to the end user 340. An elastic load balancer 323 (ELB) may be used and together with the Escenic™ v5 CMS 320 forms an auto scaling group.

During the editorial process, in the CMS either for the web publication or the tablet publication, the editorial team create articles using a combination of text (originally from Hermes™) and images (originally from NICA™) but can associate additional images and content items such as pullquotes or related article links with the article. In a preferred embodiment, when creating the article, the editorial team will also indicate the template that should be used for that article. In one example, this is given to the team as a 'drop-down' menu of the available templates. The editorial team, in the CMS, are presented with an option of which template to use and the CMS then edits the metadata so that the application is able to determine which template should be used to display that article.

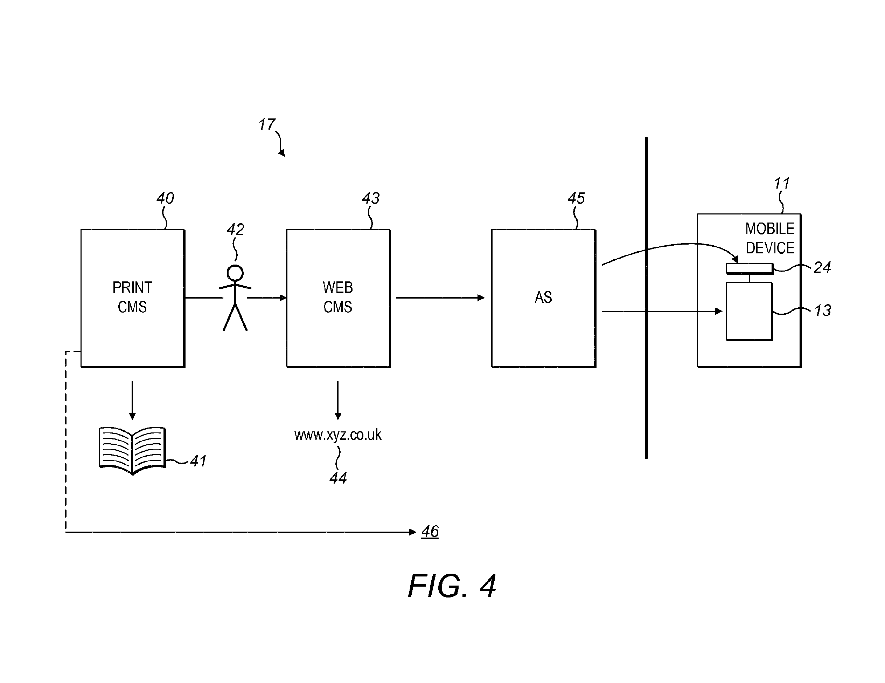

Figure 4 illustrates a workflow that outlines the path through which the content moves once stored in the content management systems. At the print CMS, Hermes™ 40, the print publication is output 41. Subsequently, some editorial information is input manually 42 and the content is transferred to the web and tablet content management system, Escenic™ v4 43. The webpage publication is then output 44 from this system. This system then autofeeds the data, via XML, to the application server 45. The application server 45 holds the templates and the content to be fetched by the mobile device 11. The mobile device 11 then fetches the content, or the template, or both, from the application server 45 as described above. Digital content may be provided to and from the print CMS 40, via a Digital Publishing Suite 46 (DPS). An exemplary DPS is provided by Adobe®.

In presenting digital content to a user, the application 13 running on the mobile device 11 passes the content data, i.e. the daily edition, to the template 24. The application 13 examines the XML file, i.e. the metadata associated with the content items, and extracts from the metadata which template should be used to display the article, i.e. the set of linked content items. The template 24 formats and optimises the presentation of data on a grid based design system to not only preserve the equivalence of reading experience between different OS and tablet devices, but also to ensure that there is no extraneous screen space either at initial layout or on subsequent adjusting of text size by the user. As described above, the template 24 itself may be predominantly JavaScript, but part CSS and HTML as well. Other technologies for implementing the present invention are of course envisaged, but the particular technologies given are preferred. As a feature of various embodiments herein, a given template is configured to operate independently of particular resolution and geometry characteristics of the display of the mobile device. In this manner, the publisher need only provision a single set of templates for mobile devices, and embodiments herein will operate with a wide range of mobile devices to display the digital content appropriately.

In an example of the present invention, in order to effectively predict the layout of the page when it is rendered on the tablet device, the template 24 is adapted to perform an initial set of calculations to determine what we term 'equivalence', that is to say, to accurately predict adaptive behaviour on any number of mobile devices. In this embodiment of the present invention, an engine is described to determine equivalence. For the purposes of the following description, this engine will be referred to as an equivalence engine or similar.

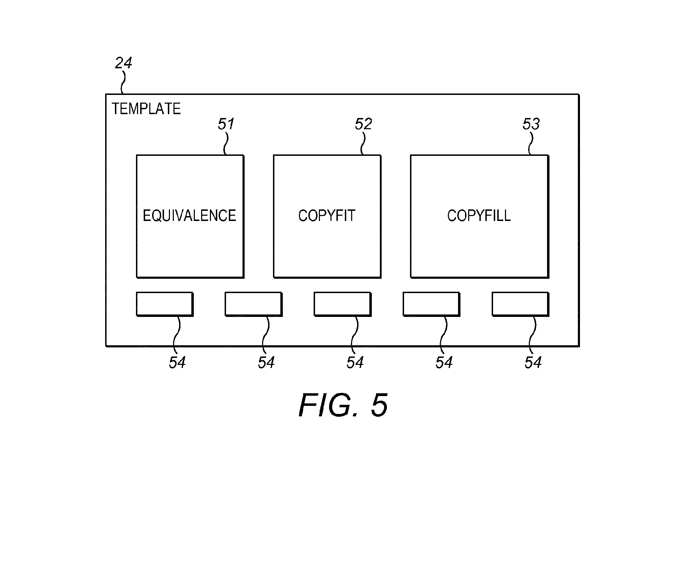

Figure 5 illustrates a template 24 according to an exemplary embodiment of the present invention. The template may comprise an equivalence engine 51 for accurately predicting adaptive behaviour on any number of mobile devices, a copyfit engine 52 for scaling and filling to a column or page boundary and a copyfill engine 53 for inserting additional content. Each engine will be described in turn. The template may also include components 54 which reference the content items and govern how each content item will appear.

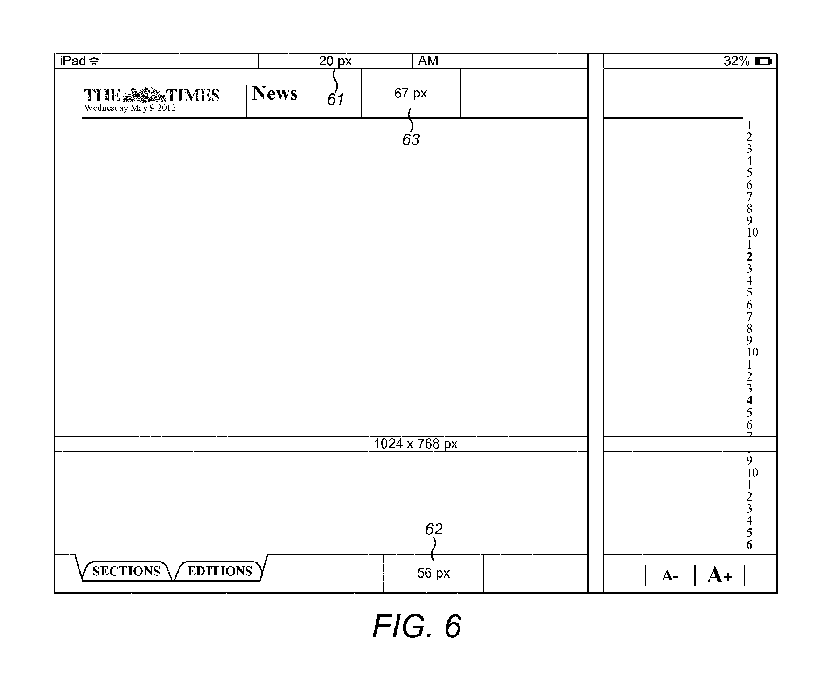

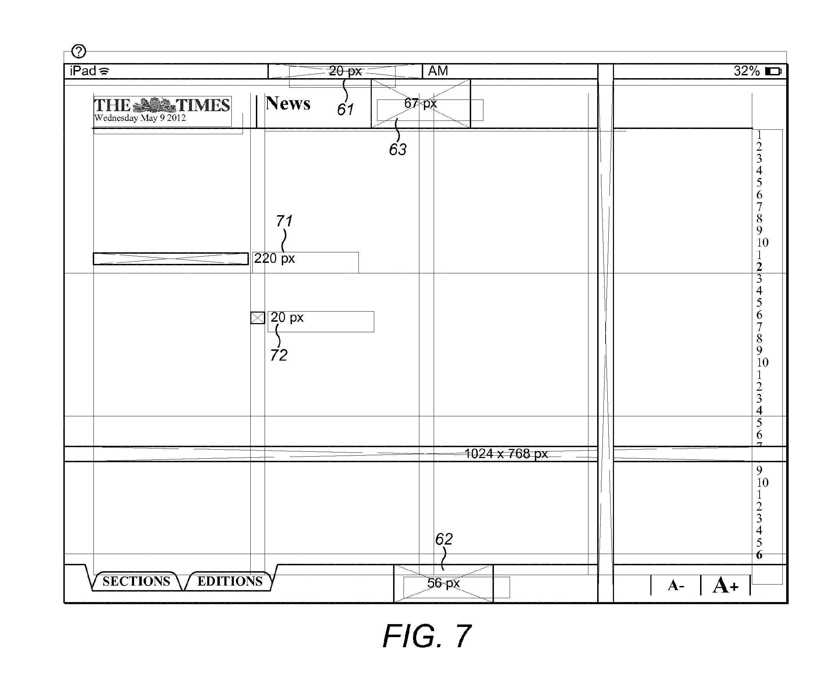

Figures 6 and 7 illustrate an exemplary tablet layout and typical sizes of the grid components on that mobile device. Shown is the fixed furniture on the mobile device display such as the status bar 61. Also shown is the fixed furniture of the application such as the navigation bar 62 and the masthead 63. Figure 7 shows an exemplary column width 71 and gutter width 72. One objective of the present invention is to provide a consistent level of design and reading experience across a multitude of devices and platforms and device orientation from an open original data source so the text and layout of an article is faithfully rendered with substantially the same apparent text size and layout components.

Before the template 24 can be executed to determine the device specific layout, the application 13 determines the pixel density of the mobile device 11. To do this, the application 13 is operable to make a call to the mobile device 11 at the native layer. The mobile device 11 will return its pixel density. However, not all mobile devices will support this functionality and indeed some may return an incorrect value. In this scenario, the application 13 contains a pre-programmed lookup table containing the pixel density values for a variety of devices. The application 13 is then operable to determine the pixel density of the mobile device from the table, or if it determines the pixel density value returned by the mobile device to be incorrect, the application 13 may be operable to override the returned value with the value stored in the lookup table to ensure correct rendering of the layout.

The application 13 is then operable to determine an effective working area for the template 24. This is the grid layout which the template is asked to populate with content. Once the grid dimensions have been determined, they are passed to the template for the template to perform its equivalence algorithms. The grid dimensions may be pre-programmed into the application or may be determined in part through an operating system call for the dimensions of the display area. Once the dimensions of the display area are known, the application may be operable to subtract from this display area, the fixed furniture of the publication such as the navigation and the masthead. The remaining area corresponds to the grid dimensions passed to the template for determining the page layout.

Although the example tablet mobile device shows the grid extending to the edges of the page, in one further example, the grid width passed to the template may be less because the status bar, or mobile device navigation bar, may be at the side of the display, leaving a smaller width for the template to fill with a layout. In a further example, the template may be passed 50% of the overall screen width so that two pages can be displayed side by side in the style of a book.

Further, it may be desirable for the page layout to be prevented from extending to the edges of the mobile device display area, in order to improve the reading experience. To arrange for this, a predetermined amount may be subtracted from the grid dimensions determined from the device display area before they are passed to the template. The predetermined number, may be, for example, 8 pixels. In another embodiment, this number may be variable and may be device specific. An effective working area for the template, i.e. the grid dimensions, has now been calculated and this is passed to the template by the application. The template is operable to, upon receipt of the pixel density and the grid dimensions as described above, generate a page layout values for the defined grid.

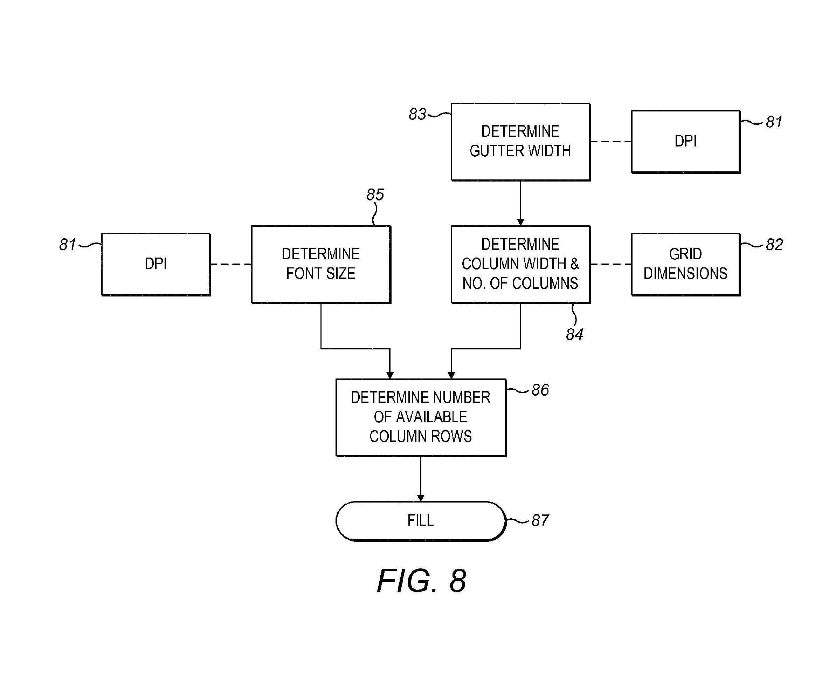

Figure 8 is a flow diagram illustrating the process carried out by the equivalence engine 51 to determine the appropriate layout values for the defined grid. Based on the mobile device pixel density 81 (dpi), the template determines the font size 85 and gutter width 83. Using the gutter width and the grid dimensions 82, the template determines the column width and the number of columns 84. Determining the font size 85 may be performed at any time, however, the output is used in determining the number of available column rows 86, which is also based on the column width and number of columns determined at 84. Once the template has determined the number of available column rows, it is operable to fill the column rows will content. This process will now be described in more detail.

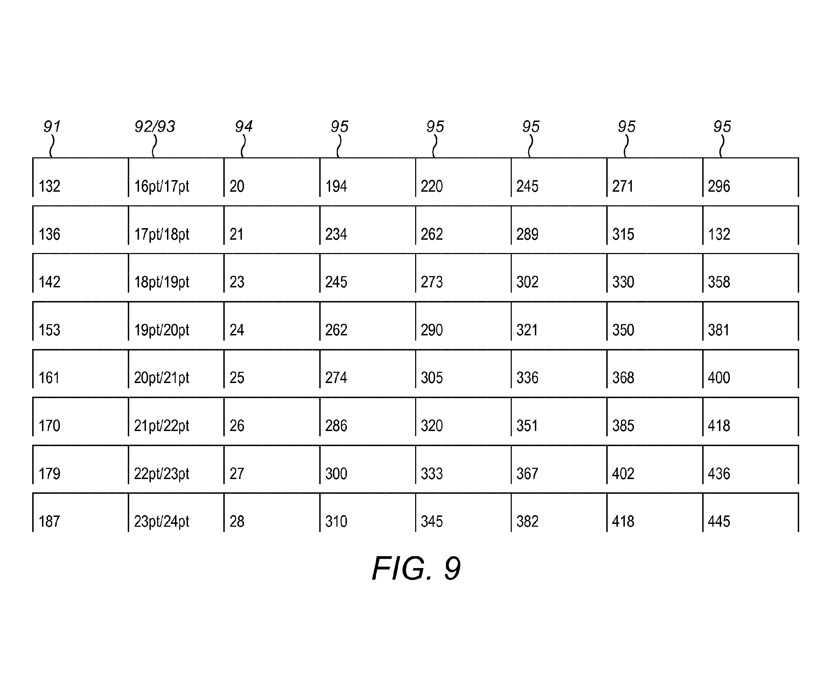

Upon receipt of the pixel density and grid dimensions, the template consults a lookup table. The lookup table may be stored within the template, for example as an array of information. An exemplary lookup table is shown in Figure 9. All values are in pixels, px, unless otherwise stated. Column 91 indicates the base density for the range. Column 92/93 indicates the text size and the corresponding line height. In publishing, font sizes are often given as a dual measurement in this way. The first number indicates the size of the letter and the second number indicates the height of the line. The second is larger than the first so that letters such as g and h do not overlap. The unit of font size is points, pt. Column 94 indicates the predetermined gutter width for that font size and columns 95 indicate the column widths for testing. How the lookup table is used is described in more detail below.

The lookup table contains entries in incremental percentage range variants compared to a base pixel density. In the exemplary table, the base pixel density is the pixel density of the iPad® or iPad® 3. The template is operable to find the nearest match in the table to the pixel density of the current mobile device. To do this, the template will round the value down when it finds a pixel density that falls within two values on the table, i.e. the pixel density values in the table cover a range starting at the given value and finishing at one below the next value in the table. For example, the base density 136 covers a range of pixel densities 3 to 9% larger than the base density 132. One of the reasons a range is used in this way is that the device-specific font size determined by the mobile device must be a whole number. Each range of pixel densities covers one particular font size and non-integer font sizes do not result.

From the lookup table, the template determines the font size, line height and gutter width for that font size based on the pixel density of the result. The values are set by the designer of the template to create the desired view of the publication. The size of the displayed font is made the same regardless of the mobile device on which the publication is viewed.

If the pixel density is higher than any of the densities set on the table, the values in the table are multiplied by the required factor. The lookup table covers 0-50% increases of the base pixel density. For example, for a 100% increase in pixel density, the values in the table are multiplied by a factor of two.

Now that the font size, line height and gutter width have been determined, the next step is to determine the optimum column width and number of columns. These optimum values are the column width and number of columns that provide for the minimum amount of white space at the edge of the grid. To determine this value, the template evaluates each entry in the lookup table against the pixel width of the grid dimensions. Specifically, the template divides the pixel width of the grid dimensions plus the gutter width, by the entry in the table plus the gutter width. The column width chosen by the template is the one which results in the highest whole number with the lowest remainder. This whole number is the number of columns to be used. The gutter width in the denominator is used in the calculation to factor in the inter-column gutter widths when testing how many columns would fit in the grid. The gutter width in the numerator factors in that there is one less gutter than columns.

To demonstrate the above, an exemplary pixel density of 149dpi is chosen. Rounding down to an entry in the base density column, the row 142 is selected. Reading along this row, a font size of 18pt, a line height of 19pt and a gutter width of 23px is determined. The grid dimensions passed to the template were 1024px x 768px, for example only. The gutter width of 23px is added to the width of 1024px to give 1047. 1047 is then divided by each column value plus the gutter width to give 3.94, 3.54, 3.22, 2.97 and 2.75, respectively. In terms of remainder, the results are: 3 with 249 remaining; 3 with 159 remaining; 3 with 72 remaining; 2 with 341 remaining; and, 2 with 285 remaining, respectively. The highest whole number with the lowest remainder is therefore 3 with 72 remaining. Thus, the template will select a three column layout with a column width of 302 px.

Next, the number of column rows, i.e. lines of text in each column, is calculated. The template employs a 4x3 modular system with the depth of each module being a possible 10, 11 or 12 lines. The modular system is used to size items on the grid and helps to place particular content items such as images, which typically have an aspect ratio of 3:2. The layout and display of these items can be reliably predicted as the size of the items does not need to be substantially changed to fit to a column boundary. That is, small changes made to the images to fit them to a column boundary do not substantially change the displayed content.

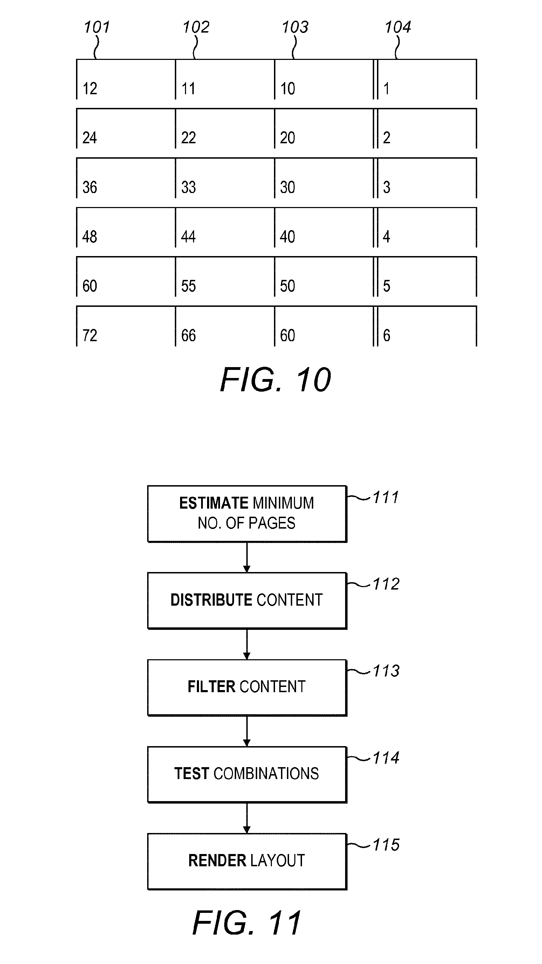

For a given area, i.e. the grid dimensions provided by the application for the template, the template divides the given grid height in pixels by the line height derived in the previous step from the lookup table. This resulting figure should then be rounded down to match one of the numbers listed in a modular grid lookup table, an example of which is shown in Figure 10. If the resulting figure is higher than any value in the table, the template applies a multiplication factor to all of the values in the table in a similar way to that described above in the context of Figure 9.

The template looks for a match in columns 101 to 103. Once it has found a match, it looks for the corresponding entry in column 104. The template then looks for the first entry in the column 101, 102 or 103, in which the match was found. The value in column 104 corresponds to the number of modules in the column and the first value in columns 101, 102 or 103, corresponds to the number of rows in that module.

The template has now defined the number of modules of a set number of rows, for example, an exemplary iPad® calculation results (in landscape) 3 modules of 12 rows. Using the example started above, the template divides 768px, the given grid height, by the line height 19 pt, to give 40.42. This rounds down to the entry 40. Thus, the template will use 4 modules of 10 rows, per column.

The template now determines the area is has to fill. To do this, the template first calculates the area occupied by the mandatory objects of the article specified in the data feed from the CMS. The number of rows each object occupies is calculated by determining the height in pixels of the object and dividing this value by the line height derived above. The number of columns occupied is calculated by dividing the width of the object plus the gutter width by the column width identified and the gutter. The total number of column rows occupied, i.e. the area, is determined from the multiplication of the number of rows and the number of columns occupied. The total area available for filling, in column rows, is then the total area available (total number of columns times the total number of rows) minus the area occupied by mandatory objects.

Currently available adaptive systems have a very fluid set of parameters where layouts can vary by 1 to an infinite number of lines and widths can vary by a single pixel. The described system establishes a series of break points that allow the layout integrity across devices to be preserved, but in turn gives the ability to predict layouts and thus the designer can define layouts since the adaptive behaviour can be accurately predicted.

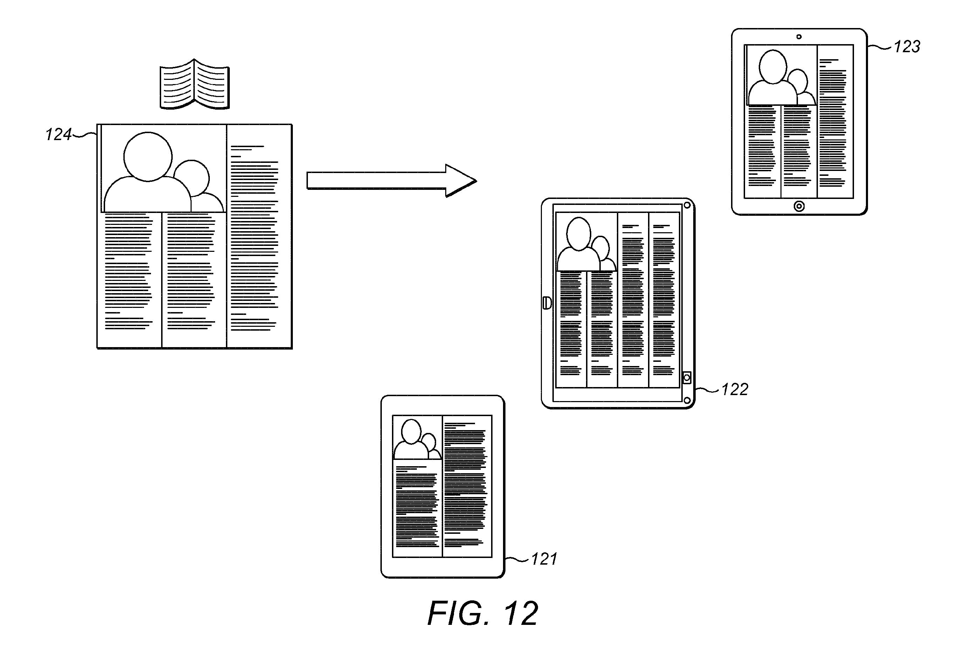

Once the optimal layout values have been determined for the device, the content can be rendered into the template. An exemplary output of the equivalence process described above is shown in Figure 12. As will be seen, depending on the screen size and pixel density of the device, the layout will be altered to be equivalent on each device 121, 122 and 123. The look and feel of the layout remains the same but substantially the same reading experience is provided. As shown, the page layout 120 is altered depending on the target device. The number of columns and the size of those columns is different for each device, with each device displaying text of the same size irrespective of the pixel density.

In a further embodiment of the present invention, an engine is provided to optimise the layout. For the purposes of the following description, this engine will be referred to as a copyfit engine but it could also be described as a fitting engine or an optimisation engine or similar.

The purpose of the copyfit engine is to take an arbitrary amount of text, i.e. copy, some associated components or content elements or items, such as images, quotations etc., and then create a layout in which the text and content items fill one or more pages, minimising or eliminating entirely any remaining white-space. The copyfit engine sits in the template and consists of web technologies: HTML, CSS and Javascript. The engine determines the best combination of content item sizes to fit the content to either a whole page, or to a column boundary. The copyfit engine is defined by specific behaviours. Examples include: adjustments to picture size by specific amounts, a strict hierarchy of stages of adapting additional content also preserve the layout integrity and predicable behaviour of the layout.

The equivalence engine has been used previously to establish a grid, consisting of a number of rows and columns, the columns being separated by a gutter, the rows, columns and gutter each having specific dimensions. The length of the copy, and size of content items can be measured in terms of this grid. The grid is effectively one page and therefore we might have enough content to go on to more than one page. It has been mentioned previously that articles have text associated with them as well as other content items. Some of these items are mandatory and are required to display alongside the copy and some are optional as determined by the publisher or editorial staff. The key is that the template knows what must be displayed and can calculate the amount of space it occupies.

The text content may, for example, be 100 column rows in length, and a mandatory component might be twenty rows high and 3 columns wide. The length of text is immutable, and the area of the page, or pages, it covers cannot be altered. In order to fill the remaining white space to a page or column boundary, additional content items may be required.

The template may comprise a series of components, each operable to govern the display of a particular content item. The components may be operable to reference a particular content item and in this way may be considered a 'smart content item'. For example, an image component may reference an image content item received in the daily edition and may know how the image should be displayed in the article. Examples of content items, and hence components, include, but are not limited to: Images, quotations, videos and sub-articles.

Content items can be displayed in different sizes, or not at all. The template may be operable to determine the size of each content item in terms of the grid. In one embodiment, the content items are comprised in the CMS datafeed and passed to components of the template which govern how they are laid out on the page. The components may be are operable to report their sizes when passed to the template in terms of the established grid. For the purpose of reporting their sizes, the information determined by the equivalence engine is made available to the components, for example, the text size and line height.

Some content items, such as images, have natural dimensions. Using these natural dimensions, plus the layout values determined by the equivalence engine, i.e. the widths of the columns and gutters and the height of rows, it is possible to determine the area of the image content item when the image is scaled to any of the column widths. If one, two and three column layouts are considered, three potential widths of an image are possible. Images may be cropped vertically or horizontally, to increase or decrease the number of rows the image takes up. Generally, this is limited to plus or minus the number of columns, although this may be altered according to editorial preference. Thus, a one column image may be increased and decreased by 1 row, giving three variations in total including the original uncropped image. Similarly, a two column image may be increased or decreased by up to two rows, giving five possible variations. A three column layout results in seven variations. In total, for a given image up to three columns wide, there are fifteen size variations or sixteen if it is allowed that an image may be omitted altogether. Generally, other content items are simpler, particularly text base content items. Quotations, for example, may be either displayed or not, giving two variations.

The components may be configured to return their sizes in a particular order, with the preferred sizes listed first. For example, if the preferred size of an image is two columns wide, the two column sizes are listed first.

Content items may or may not be compulsory. The publisher may decide that videos, for example, must always be displayed as part of the resulting layout, whereas images may be deemed optional. This determination can either be made by content item type, or for individual component instances by way of editorial control.

There are several different parts to the process performed by the copyfit engine, as illustrated by the flow diagram of Figure 11. These are: Estimation 111, Distribution 112, Filtering 113, Testing 114, and Rendering 115. These will be discussed in turn.

The estimation phase determines the minimum number of pages necessary to display the copy plus any compulsory content items. The number of pages is the area of the copy, plus the area of any compulsory content items, divided by the area of a page (as established by the equivalence engine), rounded up. Where multiple sizes of components exist, the area of the smallest size is used. The number of pages required to fit all of the content items is therefore known.

Having established how many pages are needed, components are distributed amongst them. Rules may be established by the publishers or editorial team to determine how content items are spread across pages. Examples of the rules include that no more than two images may be placed on any page and no more than one instance of a quotation may be placed per page.

Pages have limited space, so there are limits to the number of content items which can be placed on a page. On a larger tablet device it may be allowed that up to three content items may be placed on a page. On a smaller tablet device this may be reduced to two. Again, these values may be configured by the publisher or editorial team according to the preferred look and feel of the publication.

Content items are distributed by the template according to type, on the assumption that certain types of content item take precedence over others. Child articles and videos take higher precedence than images and quotations. The distribution phase does not assume that all content items can be distributed, as there may be many more content items associated with the copy than the number of pages determined during the estimation phase.

Additionally, the editorial team or publisher may specify that particular content items should appear on certain pages. For example, the editorial team may request that that a video appear on the second page of an article by default. The template will factor this in when distributing the content items across the pages of the article.

Once the distribution phase has completed, the filtering phase begins. Filtering reduces the number of combinations that need to be searched in the next phase by removing invalid combinations of content items. In one example, there are two kinds of invalid combinations, those that simply will not fit together on an single page because collectively they take up too much space (for example, more than three column images will exceed the area of a typical page), and those that are invalid according to specific rules set by the publisher or editorial team. For example, it may be required that, where two one column images are displayed, both images must be of the same height. Additionally, it may be required that a combination of two, two column images is invalid, but a two column image and a one column image is allowed. Both types of filtering reduce the number of combinations that need to be searched to find the best possible fit.

Having distributed and filtered content items amongst pages, the next step is to determine which sizes of content items will produce the best fit. The best fit is a combination of content item sizes that will fit with the copy to a whole number of pages. This is a matter of considering the different combinations of content item sizes, then dividing their area plus the copy area, by the page area. A remainder of zero means that there is an exact match. An exact match is optimal.

Earlier the template calculated the minimum content area of the page and the number of pages that would be required to fit that content. The template now knows the area of both the pages and the content and therefore the space that must be filled. The template is operable to iterate the valid combinations of the page.

It is during determination step that the order of sizes reported by each component is significant. Consider, for example, an article with six images. Assuming that the filtering stage did not remove any invalid combinations, the total number of combinations is 16x16x16x16x16x16 = 16,777,216. The goal of the copyfit engine is not just to determine an ideal layout but to do so in a reasonable length of time, measured in fractions of a second, given that the target devices have limited computational resources. Considering millions of combinations is less than ideal.

To consider the number of combinations for a single page, the template produces a cartesian product of the sizes. For example, consider that there are two content items on a page, *a* & *b,* and that each content item has three sizes:
*[a 1, a2, a3], [b1, b2, b3]*
The cartesian product of these two sets of arrays is as follows:
*[a1, b1], [a1, b2], [a1, b3], [a2, b1], [a2, b2], [a2, b3], [a3, b1], [a3, b2], [a3, b3]*

Note that if it is assumed content item *a* is more significant than content item *b,* and that size 1 is more preferable than size 3, then the cartesian product gives us a set of combinations which considers the preferred sizes of content item *a* before the preferred sizes of content item *b.* The template can thus search through the combinations in an ideal order.

Similarly, having produced the cartesian product for the combinations of content items on a single page, the template is then operable to produce the cartesian product of these combinations across multiple pages. The resulting combinations thus consider the most significant sizes of the most significant content items of the most significant pages first. The preferences may be set on a publication specific basis depending on what the publisher or editorial team want the end result to look like.

At this stage the template has considered the order of combinations to search, however the template still has the issue that there may be many more combinations that it can search in a reasonable time. However, the template does not need to consider every combination. The template only needs to search until it finds a combination that satisfies the criteria and produces a layout that fills a whole number of pages. At this point the template can stop searching.

Additionally, it's important to note that there may not be a combination which meets this criteria. In this case the template is configured to allow that if it can not fill a whole number of pages, the next best option is to fit an exact number of columns, increasing the likelihood that a match can be found. Thus, every time a combination is considered, it is determined whether or not it is a better match than any previous combination found.

Finally in the testing phase, the template may be configured to place a limit on the number of combinations to consider. This limit is an arbitrary number determined from testing the algorithm on a target device. Having tested this number of combinations, the template is operable to stop the process and use the best match found so far.

Having determined the best combination, the template will then render the components according to a set of predetermined rules and copy into a layout. This phase is the placement of things. In one example, the template is configured such that a two column image on the first page will start at the second column at the top and a pulled quote will start at the bottom. These are a publication by publication set of rules.

An example of the output is shown in Figure 12 in conjunction with an illustration of the equivalence calculation described above. The column width is set for each device 121, 122, 123 and the device specific font size calculated. As is shown, the image component of the article 120 is sized so that the same text content fills the page without allowing any white space and without altering the layout determined by the equivalence calculation.

Examples of the specific rules that may be applied for each category of content item by the copyfit engine are described below. These rules apply particularly to the distribution and filtering phases of the copyfit engine process. By adhering to these rules, the engine may maintain the look and feel of the specific publication. The following are examples only and will vary between publications. It will be understood that the template can encode a variety of further or alternative rules for the distribution and filtering of content items. Generally the rules given below apply to one to three column layouts but the principles remain the same for other layouts.

In a first example, the rules for images may include the following: the first page image may be mandatory and there may only be one or two column pictures. If there is a one column image this may be in the second column and if there are two column images, these may be placed into columns two and three. If there is more than one page to the article, a big image may be placed on the first page. Larger images may be shown in the content flow before smaller images. The number of lines under an image may be a minimum of four lines, or there may be no image flush to the bottom of the page. Images may always go from the top or the bottom of the page. Three column images may always sit in columns one, two and three on any page. For a full page image, portrait and landscape may be required to be provided in the daily edition (ie, as a cover ahead of the standard article). Labels may be included for portrait and landscape to indicate that the image goes first, ahead of the article.

In a second example, for captions, one column images may have captions underneath. Two column, three column and four column captions may sit in a single column on the left hand side.

In a third example, videos may be mandatory and take precedence over images. Videos may not be cropped. Alternatively, as described above, videos may be placed on the second page of an article if the article has multiple pages.

In a third example, for pullquotes, the following rules may be adhered to by the engine: one per page; automation within columns two and three; with no pictures, put in the centre of the column; when a picture is there, put from bottom of the column; first page - columns two (bottom), three (bottom) or four (middle); second page, no picture - two columns (centre), three columns (centre), two columns (bottom), three columns (bottom); and, pullquotes may be styled via the content management system.

In a further example, the inclusion of child articles may be mandatory and may adhere to the following rules: if there is an image on a front page, the child article may be on the second column; if a two column layout, the article may be in a box in columns two and three at the top; if a three column layout is used, the article may be at bottom right hand side; the article may start from column two and move across; a minimum of five lines may be required underneath; the text underneath the article must the size of the image; if there is exactly one column of text, it can fill the fourth column; if there are up to two images associated with the article, a single image may be placed in the centre and two column images in columns two and three; pullquotes are to behave in the same manner as normal articles; and, bylines can be used to sit flush with text or above it, dependant on what the copyfit engine needs to fill the white space.

Several example behaviours of the copyfit engine when filling a single page with images and text will now be described. It will be understood that all examples given here may be used in combination or in isolation. The displacements and left spaces given are merely exemplary.

Firstly, an image may be scaled in dependence on the layout of the page. For example, if there is a one line headline and a two column picture, the picture may be scaled to a single column picture leaving lines of text plus the caption below. It may alternatively be scaled to a three column picture. If there is a two column headline and a two column picture, it may be scaled to a three column picture displacing a number of lines of text. If there is a two line headline and a one line standfirst with a two column picture, the picture may scale to a three column picture displacing a number of lines of text. If there is a three line headline, then a two column picture may scale to a three column picture displacing a number of lines of text. If there is a standfirst in this example, it may move to column one of the text.

Images may be scaled and cropped, for example, a two or three column image may be re-seized vertically by two lines and the image within may be scaled and centred to fill the depth cropping at either side.

As described above, manipulations may have a preferred order. For example, image scaling may be most preferable, then the addition of an additional image, then the addition of a pullquote, then the addition of related content and finally the addition of a news in brief box, in order to fill the page. House advertisements could also be added.

An example behaviour of the copyfit engine for filling a multiple page article will now be described. It will be understood that all examples given here may be used in combination or in isolation. The displacements and left spaces given are merely exemplary. The ordering of the manipulations is exemplary but preferred.

If one column remains, and only a few lines on the previous page(s) could be reduced to allow a single column house advertisement to be added, the existing image on page two can be scaled, a new image could be added, a pull quote could be added, related content could be added or a news in brief box could be added.

If two columns remain, preferably, a third column is filled leaving space for a one column house advertisement, additional content, or the content is reduced to leave space for a two column house advertisement or additional content. If there are 2-4 lines in the column, the image is reduced. If there are a number of lines left, then a two column picture is reduced to a one column picture. A pull quote could be added, related content could be added or a news in brief box could be added.

If three columns remain, preferably, the second column is filled leaving space for a two column house advertisement. If there are 2-4 lines in the column, the image is reduced. If there are 26 lines left, then a two column picture is reduced to a one column picture. A new image could be added, a pull quote could be added, a further image could be added, related content could be added or a news in brief box could be added.

If four columns remain, the previous page content could be reduced to make the article a single page, a three column image could be added, a three column house advertisement could be added and related content could be added.

In a further embodiment, if the user re-sizes the device specific font size, the calculations described above may be re-calculated. In this way, the optimal column widths and content item placement and size can be recalculated to ensure that the layout fits the publication's look and feel and the text remains readable and consistently laid out. In a specific example, the new font size will be compared to the base font size to determine the layout values used.

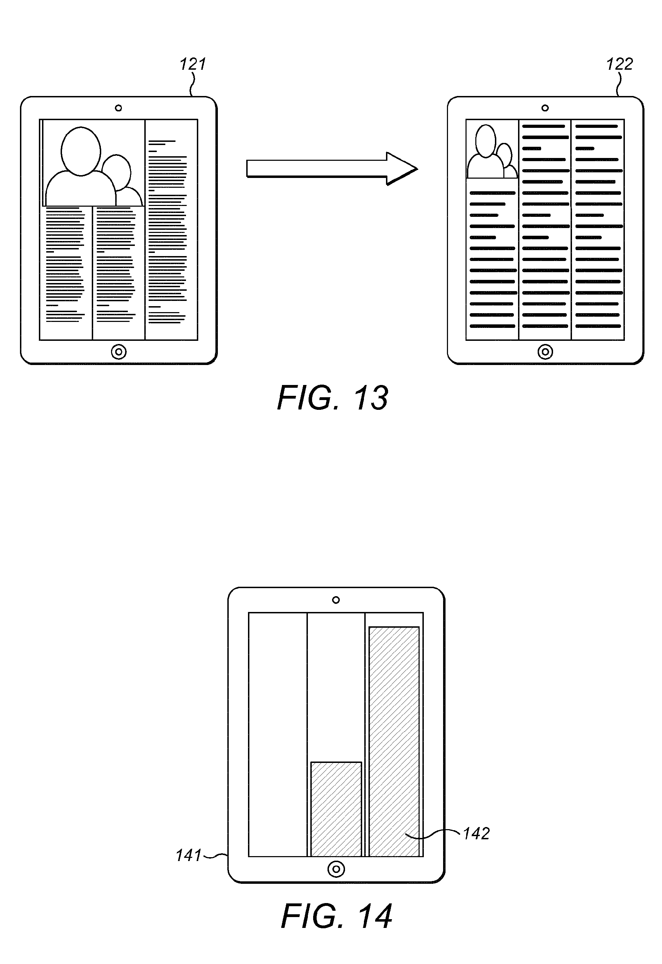

In an example illustrated in Figure 13, the copyfit engine is shown resizing the components on the page in response to user input, for example, an input for the font to be resized between a before state 131 and an after state 132. If the font is resized, the copyfit engine determines that the image should be scaled so that the text is visible on the page and scrolling is not required.

In a further embodiment of the present invention, a second engine is provided to further optimise the layout. For the purposes of the following description, this engine will be referred to as a copyfill engine but it may also be described as a filling engine, a further optimisation engine or similar.

The copyfill engine sits in the template and consists of web technologies: HTML, CSS and Javascript. The engine draws on a predefined list of 'components' to adapt on the fly to fill a variety of page grids with content to column or ultimately page edge. The copyfill engine examines the amount of space left over after the article copy and its components have been rendered this may or may not be as a result of the copyfit engine rendering. The copyfill engine will try and fill to a page boundary, but this will not always be possible, and it may try and fill to a column boundary instead. The copyfill engine looks for additional content to fill the remaining space. This could be content such as house adverts, commercial adverts, related article links or social media content.

The white space left over once the equivalence has been determined and the copyfit engine has finished is shown in Figure 14. In this example, there is no image content or similar displayed on the devie 141. The copyfill engine calculates the whitespace 142 between the end of the article and the end of the page and automatically displays various content items within the space according to a prioritisation algorithm. The additional content may already be on the device or may be downloaded as part of the download sequence.

The content items placed by the copyfill engine may preferably be specific 'copy fill' content. The copyfit engine may have previously fit the other content items to a column boundary. The remaining space to be filled may therefore be exactly one or two columns wide. The copyfill content may be configured to be this specific size for easy placement. The copyfill content may be provided by the CMS for use throughout an infinite number of articles depending on how many require it. It may be adaptive.

In summary, the copyfill engine is a means of making the best use of space that is left over at the end of the copyfit process. The copyfit content is optional content that may be raw text data of a variable length that is truncated at the end of a column boundary or it could be a responsive HTML and JavaScript file that adapts to the space left over. Generally, the copyfill engine places the content at the end of the article.

The processes performed by the equivalence engine, copyfit engine and copyfill engine, may be run twice for both portrait and landscape layouts such that if the reader switches orientation, the layout is responsive.

In a further exemplary embodiment, the layout formatting may be performed at the server side of the system, rather than dynamically on the device. Some devices may have limited processing capability which may restrict the ability of the device to render the layouts or at least to do so in a timely manner. The present implementation reduces the processing demands on the device itself. These same mechanisms could also be used to layout content across a page for printing purposes. This would eliminate the need to manually curate the content of a newspaper.

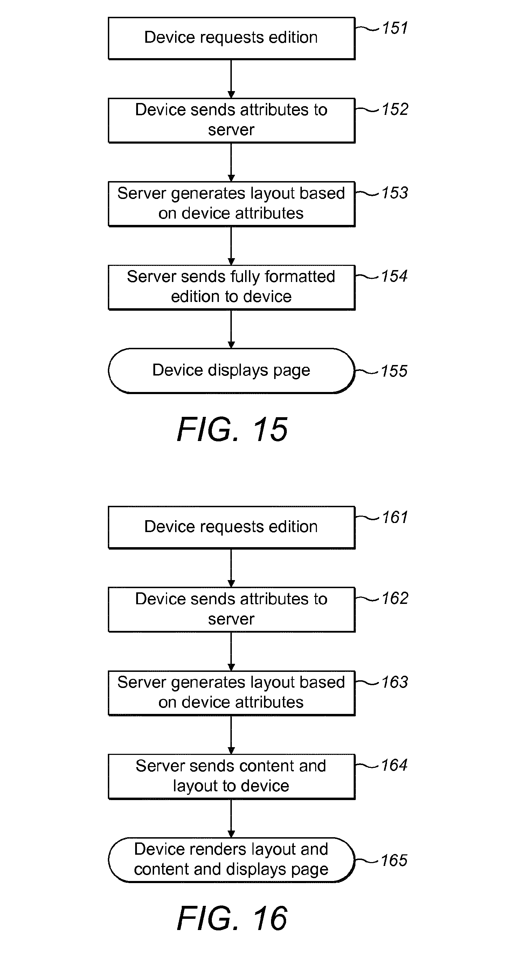

This exemplary embodiment will now be described in the context of Figures 15 to 17. Unless otherwise indicated, or is obvious from the context, the present exemplary embodiment is unchanged from the examples described above. For example, the server-side implementation uses the algorithms of the described equivalence, copyfit and copyfill engines to produce a device-specific layout.

Figure 15 illustrates a flow diagram which shows the key concepts of the present example along with a first specific implementation. First, at step 151, the device requests an edition from the application server. This step is unchanged from that described above.

Next, at step 152, the device sends attributes to the server. These device attributes may be indicative of the type of device, or alternatively or additionally, the attributes may include pixel density information, that is, information required by the server in order to generate the device specific layout. The server may contain a lookup table which contains the required device specific information for each device or type of device. Thus, if the device merely indicates which device it is, or which type of device it is, the server is able to fetch the necessary device attributes in order to generate a device specific layout.

In a preferred implementation, the device screen dimensions are supplied in addition to the pixel density information. In a preferred implementation, a distinction is made between the physical screen size of the device, i.e. width and height, and the usable screen size, i.e. the area within the device status bars. The specific dimensions of the device may be different in portrait and landscape orientation, so the width and height for portrait and landscape may be passed by the device.

Steps 151 and 152 are illustrated separately, but in practice they may occur at the same time. For example, when requesting the edition, the device may pass a set of parameters including the device characteristic.

The device may also send to the server the page grid dimensions which it should fill with a layout. If no page grid is sent, the server may utilise a default page grid for that device or type of device. For this purpose, the server may assume that the layout is to fill the whole screen or a predetermined proportion of it.

Once the server has identified the device attributes, the server is operative to generate a layout using the methods described above. In particular, the server may be operative to use the templates and the described equivalence, copyfit and copyfill engines to determine a device specific layout, step 153, to fill the given page grid.

In the example illustrated in Figure 15, the server generates a fully formatted edition, which may be in PDF format or as a series of images where each images represents one page of the edition, among others. The edition is sent to the device for display, step 154. The device then displays each page in the conventional manner, step 155. In this way, the server itself carries out the computational processing requirements of the various engines to determine a device specific layout and a fully formatted edition. Depending on the size or type of device, the number of pages in the edition may be smaller. For example, for a small device the layout may be six pages whereas for a large device the layout may only by three pages.

In a further exemplary implementation, illustrated in Figure 16, the server is operative to separate the content and layout when transmitting the edition to the device. As shown, in the same manner described above, the device will request an edition and send attributes to the server at steps 161 and 162, respectively. The server may of course identify the required device attributes required in another manner, as described.

At step 163, the server will determine a device specific layout based on the device attributes, using the described algorithms. In this example, at step 164, instead of sending a fully formatted edition to the device, the server will send the content feed from the CMS to the device in the manner described above along with instructions to the device as to how to layout the content. The instructions define the appearance of one page of the edition on the device for subsequent rendering. In this way, the layout directs the formatting in the sense that it prescribes or dictates how the page should be displayed on the screen and further identifies where to break the text/content into separate pages for that device.

The instructions may be in the form of domain specific XML. The XML may define the formatting of the page, which characters are displayed and also where the images are placed on the page. Assuming for example that the content feed from the CMS may also be sent in the form of an XML document, the XML may define an exemplary article as:

```
       <article id="_"headline="_">
              <body>
                    text
              </body>
              <image id ="_"url="_"/>
       </article>
```

It will of course be understood that the exemplary article and XML definition above are simplified and are only representative of the form an XML definition may take.

As described, a domain specific XML may be used to instruct the device as to how to render the content on the page. An exemplary, over-simplified XML document may for example be:

```
       <article-format articleRef="_">
              <page startCharindex="0"
                    endCharIndex="4023"
                     noOfColumns="3"
                     noOfRows="32"
                    gutter ="18px"
                     margin="18px">
                     <text startCharIndex="0" endCharIndex="412" />
                     <image imageRef="_" width="2" />
                     <text .../>
                     <text .../>
              </page>
              <page>
              </page>
       </article-format>
```

The above example illustrates an instruction to the device as to how an individual article should be displayed. Each page of the device should include 3 columns and 32 rows with a gutter and margin of 18 pixels. These numbers are derived from the algorithms described above and illustrated in steps 81 to 86 of Figure 8. In this way, the server is operable to instruct the device how to format the content it receives from the CMS.

The example above goes on to illustrate the output of step 87 of Figure 8 when the algorithm is implemented on the server-side. In this example the instructions indicate to the device which characters of the text should be placed first and then the size of the image that should be displayed. The example goes on to indicate which text characters should then be displayed. This part of the instruction may be determined by the described copyfit and copyfill algorithms.

At step 165, the device will then render the layout and content and display the relevant page. Once again, it can be seen that the processing is performed by the server, however, in this embodiment there is still some work to do for the device in rendering the articles. The bandwidth requirements may be reduced compared to the example where the fully formatted edition is sent. Additionally, there may be increased flexibility in the way the information is delivered to the device, that is, from which servers for example.

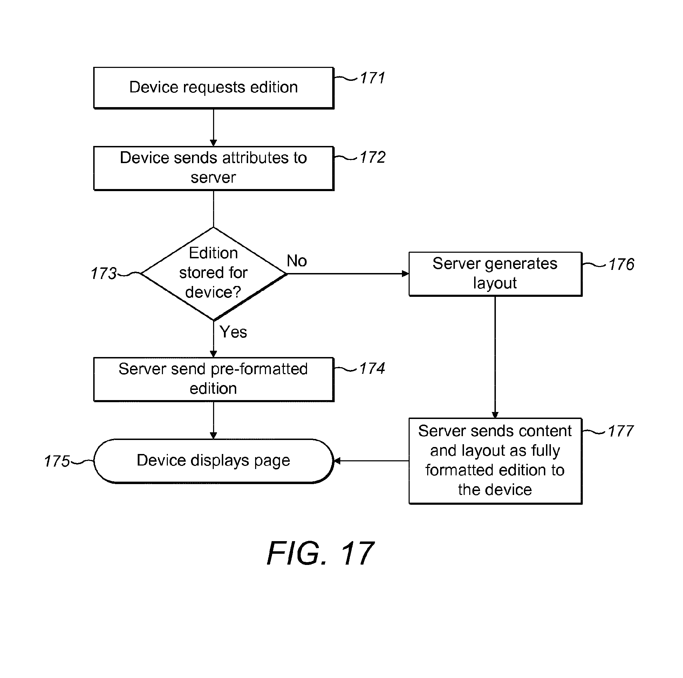

Figure 17 illustrates a further exemplary implementation in which the server may have stored on it pre-formatted editions for the most popular devices. As shown, in the same manner described above, the device will request an edition and send device attributes to the server at steps 171 and 172, respectively. Next, at step 173, the server will determine if it has an edition stored for that device. If an edition has been stored, then the server will send this pre-formatted edition to the device, step 174. Thus, the edition can be considered to be a 'cache-generated' edition. The device will then display the relevant pages, step 175. The server may of course have stored a specific layout for that edition, and may send the content and layout separately.

If the server does not have an edition stored for that device, step 173, then the server may generate the device specific layout at step 176. At step 177, the server may send a fully formatted edition or separate content or layout to the device, step 177. At step 175, the device then displays the relevant pages, step 175.

Above, it has been described that a server is operative to generate a device specific layout and send this to the device for display, however a program for generating the editions is also considered. For example, when producing the editions, the designer may design a single set of content and select the devices for which it should be formatted. This may for example be in the manner of a drop down list in a graphical user interface. In this way, a single set of content generates multiple editions that work across multiple devices. In one scenario, multiple application servers may be used to store editions for each type of device. The pre-rendered editions are available for a select number of devices. Each device, i.e. each native application, may be pre-programmed with location information as to where to download the specific edition for that device. The advantages of the present invention are still achieved, since a single set of content is required to produce editions for multiple devices.

While the present invention has been described in the context of an application for a mobile operating system, preferably a mobile tablet operating system, it will be understood that the principles described will be equally applicable to any digital content publishing method such as the web, tablets or smartphones. The principles are not limited to a specific operating system or architecture and indeed are designed to be system or platform agnostic. Equally, whilst the device is described as being a mobile device, the principles described may be equally applicable to other devices, including personal computers (both laptops and desktop) and e-readers.

It is important to note that while the present invention has been described in a context of a fully functioning data processing system, those of ordinary skill in the art will appreciate that the processes of the present invention are capable of being distributed in the form of a computer readable medium of instructions and a variety of forms and that the present invention applies equally regardless of a particular type of signal bearing media actually used to carry out distribution. Examples of computer readable media include recordable-type media such as floppy disks, a hard disk drive, RAM and CD-ROMs as well as transmission-type media such as digital and analogue communications links.

## Claims

1. A computer-implemented method of publishing digital content in a page-based grid format for a device, the method comprising:
identifying device attributes;
obtaining raw digital content;
determining a device-specific font size for the raw content based on the device attributes;
determining a column width for page columns within a page grid;
determining the number of available column rows within the page grid based on the column width;
automatically populating the page columns with the digital content to generate a device specific digital publication in a page-based grid format for display on the device; and,
sending the publication to the device.

2. A computer-implemented method of publishing digital content in a page-based grid format for a device, the method comprising:
identifying device attributes;
determining a device-specific font size for raw digital content based on the device attributes;
determining a column width for page columns within a page grid;
determining the number of available column rows within the page grid based on the column width;
generating device specific computer instructions which direct the layout and population of the page columns with the digital content; and,
sending the computer instructions to the device for subsequent rendering of the digital content on a display of the device.

3. A method according to claim 1 or 2, in which the method is performed at a server capable of communicating with the device.

4. A method according to any preceding claim, further comprising:
receiving a request from the device for digital content.

5. A method according to any preceding claim, in which identifying device attributes comprises:
receiving the device attributes from the device.

6. A method according to any preceding claim, in which the step of identifying device attributes includes providing a graphical user interface for selecting a target device from a plurality of devices.

7. A method according to any preceding claim, in which the device attributes include one or more of a group selected from device type, specific device and device pixel density.

8. A method according to any preceding claim, further comprising:
providing a set of content layout templates, the set having at least one member, wherein the raw digital content is associated with at least one of the templates and wherein each of the content layout templates includes computer readable instructions which when executed are operative to perform at least the steps of determining a column width, determining the number of available column rows and automatically populating the page columns with the digital content or generating device specific computer instructions.

9. A method according to any preceding claim, in which the step of automatically populating the page columns with the digital content or generating device specific computer instructions includes fitting text content to fill to a column boundary.

10. A method according to claim 9, in which the step of automatically populating the page columns with the digital content or generating device specific computer instructions includes fitting text content to fill to a page boundary.

11. A method according to claim 9, in which the step of automatically populating the page columns with the digital content or generating device specific computer instructions includes fitting text content to a boundary by scaling non-text digital content.

12. A method according to any preceding claim, in which the step of automatically populating the page columns with the digital content includes:
identifying any unfilled column rows; and,
substantially filling unfilled column rows to a page boundary with additional digital content.

13. A method according to any preceding claim, further comprising determining the dimensions of the page grid, wherein the step of determining the column width includes:
determining a column gutter width by evaluating a pixel density against a predetermined lookup table; and,
evaluating a predetermined set of column widths based on the page grid dimensions and the column gutter width.

14. A storage medium comprising computer readable instructions that when executed by a processor are operable to publish digital content in a page-based grid format for a device, wherein the computer readable instructions when executed by a processor are operable to:
identify device attributes;
obtain raw digital content;
determine a device-specific font size for the raw content based on the device attributes;
determine a column width for page columns within a page grid;
determine the number of available column rows within the page grid based on the column width;
automatically populate the page columns with the digital content to generate a device specific digital publication in a page-based grid format for display on a device; and,
send the publication to the device.

15. A storage medium comprising computer readable instructions that when executed by a processor are operable to publish digital content in a page-based grid format for a device, wherein the computer readable instructions when executed by a processor are operable to:
identify device attributes;
determine a device-specific font size for raw digital content based on the device attributes;
determine a column width for page columns within a page grid;
determine the number of available column rows within the page grid based on the column width;
generate device specific computer instructions which direct the layout and population of the page columns with the digital content; and,
send the computer instructions to the device for subsequent rendering of the digital content on a display of the device.
